# EUROPEAN PATENT APPLICATION

(11) **EP 1 729 251 A1**
(43) Date of publication of application: **06.12.2006**
(21) Application number: 06009452.1
(22) Date of filing: 08.05.2006
(51) Int. Cl.: G06Q 10/00

(54) **Process management apparatus and process management method**

(30) Priority: 30.05.2005 JP 2005157988
(71) Applicant: OMRON CORPORATION, Kyoto-shi, Kyoto 600-8530 (JP)
(72) Inventor: Matsushita, Akira, Omron Corp., Shimogyo-ku Kyoto-shi Kyoto 600-8530 (JP); Mori, Hiroyuki, Omron Corp., Shimogyo-ku Kyoto-shi Kyoto 600-8530 (JP); Koga, Jumpei, Omron Corp., Shimogyo-ku Kyoto-shi Kyoto 600-8530 (JP)
(74) Representative: Vossius & Partner

(57) **Abstract**

There is provided a process management apparatus that allows even a user with a low level of technical skills to accurately and quickly estimate a failure factor when a failure occurs in an object of processing due to a failure of processing in a processing system that performs processing for the object. An estimation processor reads out information on conditions leading to failure factors from an estimation knowledge recording section and presents the conditions to a user as questions in order. Analysis IDs are associated with the respective conditions. A data processor 32 receives analysis ID information of a condition corresponding to a question to read out data collection method information and data processing method information corresponding to a relevant ID, performs analysis in accordance with the data collection method information and the data processing method information, and presents an analysis result to the user.

## Description

The present invention relates to a process management apparatus, a process management method, a process management program, and a recording medium having the program recorded therein for managing a process for processing an object.

### 2. Description of the Related Art

In a production line of a factory, processing for improving a process is required in order to improve a yield. Process improvement is performed by specifying a step that causes a failure of a manufactured product and correct the step to eliminate the cause.

However, in a manufacturing process including plural steps, various factors are conceivable as candidates of a cause of a failure. The factors include a defect of a component of a manufacturing apparatus, a problem of setting of the manufacturing apparatus, and a problem in a transportation route. Thus, it is extremely difficult to specify a cause of the failure.

When a phenomenon that causes a failure appears, symptoms of the failure appear in manufactured products. Moreover, an operation history of a manufacturing apparatus and an inspection history of an inspection apparatus may be affected more or less. Data concerning symptoms of defective products and data concerning the operation history of the manufacturing apparatus and the inspection history of the inspection apparatus are enormous. Thus, it is also difficult to analyze the cause of the failure.

A person in charge of production management having a lot of experience concerning production management knows, through the experience, a relation among influences of the cause of the failure on the defective products, the manufacturing apparatus, and the inspection apparatus and a method of interpretation of the influences. Thus, it is possible to efficiently carry out process improvement. However, a person in charge of production management not having much experience specifies a cause of the failure by examining candidates of the cause one by one. Thus, a great deal of time is consumed for process improvement.

Therefore, a method with which even people in charge of production management in all levels of technical skills can highly accurately and highly efficiently realize estimation of a cause of abnormality is demanded in a production site. As such a method, a method of analyzing a cause of a failure in a production line of printed boards is disclosed in Japanese Patent No. 3511632 (issued March 29, 2004). In this method of analyzing a cause of a failure, a relation between a printing result and a mounting result, a relation between a mounting result and a soldering result, and the like are indicated by probabilities and a failure factor is estimated on the basis of the probabilities.

However, in the method disclosed in Japanese Patent No. 3511632, a failure factor to be estimated is content of processing in respective steps. Thus, it is impossible to accurately specify a failure factor concerning a failure not caused solely by processing in the respective steps such as a failure caused by an interaction among plural steps.

In order to accurately specify such a failure factor, it is conceivable to estimate a failure factor by checking all kinds of knowledge concerning all failure occurrence mechanisms assumed. However, in the case of this method, the estimation of a failure factor takes an extremely long time.

The invention has been devised in view of the problems described above and it is an object of the invention to provide a process management apparatus, a process management program, a recording medium having the process management program recorded therein, and a process management method for allowing even a user having a low level of technical skills to accurately and quickly estimate a failure factor when a failure occurs in an object of processing because of a failure of the processing in a processing system for processing the object.

In order to solve the problems, a process management apparatus according an aspect of the invention includes: an estimation knowledge recording section that records factor estimation knowledge information that associates one or more candidates of failure factors with each of plural failure results, which can occur in a processing system for processing an object, and includes information concerning conditions leading to the respective failure factors and analysis ID information corresponding to the respective conditions; an analysis method recording section that records analysis method information of inspection result data concerning an inspection result of a process in the processing system and analysis ID information corresponding to the respective pieces of analysis method information; factor estimating means for estimating, on the basis of the factor estimation knowledge information corresponding to a specific failure result, a failure factor corresponding to the failure result; and analysis processing means for analyzing inspection result data on the basis of the analysis method information. The factor estimating means presents the conditions required for estimation of a failure factor to a user as questions. The analysis processing means receives analysis ID information of the condition corresponding to the questions to thereby perform analysis on the basis of the analysis method information corresponding to the ID and present an analysis result to the user.

In order to solve the problems, a process management method according to another aspect of the invention includes: an estimation knowledge recording step of recording factor estimation knowledge information that associates one or more candidates of failure factors with each of plural failure results, which can occur in a processing system for processing an object, and includes information concerning conditions for the respective failure factors and analysis ID information corresponding to the respective conditions; an analysis method recording step of recording analysis method information of inspection result data concerning an inspection result of a process in the processing system and analysis ID information corresponding to the respective pieces of analysis method information; a factor estimating step of estimating, on the basis of the factor estimation knowledge information corresponding to a specific failure result, a failure factor corresponding to the failure result; and an analysis processing step of analyzing inspection result data on the basis of the analysis method information. In the factor estimating step, the conditions required for estimation of a failure factor are presented to a user as questions. In the analysis processing step, analysis ID information of the condition corresponding to the questions is received, whereby analysis is performed on the basis of the analysis method information corresponding to the ID and an analysis result is presented to the user.

According to these aspects of the invention, the factor estimation knowledge information and the analysis method information are prepared in advance. As described above, the factor estimation knowledge information associates one or more candidates of failure factors with each of plural failure results and includes the information concerning conditions leading to the respective failure factors and the analysis ID information corresponding to the respective conditions. The analysis method information includes the plural pieces of analysis method information and the analysis ID information for specifying the respective pieces of analysis method information. In other words, the respective conditions in the factor estimation knowledge information and the analysis method information are associated with each other by an analysis ID.

When a condition required for estimation of a failure factor is presented to a user as a question, an analysis result obtained by performing analysis in accordance with the analysis method information associated with the condition of the question by the analysis ID is presented to the user. Thus, the user is allowed to obtain an analysis result of most appropriate inspection result data even if the user does not know how to perform an analysis of inspection result data in response to the question required for estimation of a failure factor. Thus, it is possible to provide a process management apparatus that allows even a user unaccustomed to process management to quickly and accurately perform factor estimation.

For example, when the analysis method information is included in the factor estimation knowledge information, it is necessary to record the respective pieces of analysis method information with respect to all conditions in the factor estimation knowledge information. Thus, there is an enormous amount of information. According to the aspects of the invention described above, the analysis method information and the factor estimation knowledge information are provided separately and are associated with each other by an analysis ID. Consequently, it is possible to reduce an amount of information that should be prepared.

In still another aspect of the invention, in the process management apparatus, the analysis method information may be data collection method information that indicates which inspection result data should be collected out of the inspection result data and data processing method information concerning a processing method for data collected. The analysis ID may specify a combination of the data collection method information and the data processing method information.

According to this aspect of the invention, the data collection method information and the data processing method information are included as the analysis method information. Thus, the analysis processing means can collect inspection result data to be required from inspection result data on the basis of the data collection method information and process and analyze the inspection result data collected on the basis of the data processing method information. This makes it possible to cause the analysis processing means to more surely perform the analysis.

In still another aspect of the invention, the process management apparatus may further include: inspection result inputting means for receiving inspection result data from an inspection apparatus that inspects a process in the processing system; and an inspection result recording section that records the inspection result data received by the inspection result inputting means. The analysis processing means may acquire inspection result data from the inspection result recording section and perform an analysis.

According to this aspect of the invention, inspection result data is received by the inspection result inputting means as a result of inspection in the inspection apparatus. The inspection result data received is recorded in the inspection result recording section. Thus, the analysis processing means only has to perform an analysis by reading out the inspection result data recorded in the inspection result recording section. Therefore, for example, compared with the case in which an inspection result is acquired from the inspection apparatus, it is possible to acquire inspection result data required when the inspection result data is necessary.

In still another aspect of the invention, in the process management apparatus, the analysis processing means may receive the analysis ID information according to an input from the user.

According to this aspect of the invention, the user inputs analysis ID information to the analysis processing means. This makes it unnecessary to provide means for passing the analysis ID information from the factor estimating means to the analysis processing means. Thus, when the factor estimating means and the analysis processing means are provided independently from each other, it is possible to simplify constitutions of the factor estimating means and the analysis processing means.

In still another aspect of the invention, in the process management apparatus, the factor estimating means may transmit analysis ID information of a condition corresponding to a question presented to the user at the present point to the analysis processing means. The analysis processing means may receive the analysis ID information from the factor estimating means.

According to this aspect of the invention, the factor estimating means transmits the analysis ID information of a condition corresponding to a question presented to the user at the present point to the analysis processing means. The analysis processing means receives the analysis ID information from the factor estimating means. Thus, analysis processing corresponding to the presented question is executed without intervention of the user. This makes it possible to more quickly perform the factor estimation processing.

In still another aspect of the invention, in the process management apparatus, the factor estimating means may transmit information on a failure result to the analysis processingmeans. The analysis processing means may perform an analysis on the basis of the information on the failure result received from the factor estimating means and the analysis method information.

According to this aspect of the invention, the information on the failure result is passed from the factor estimating means to the analysis processing means. Thus, it is possible to reduce time and labor for the user to input the information on the failure result to the analysis processing means. This makes it possible to more quickly perform the factor estimation processing.

The process management apparatus may be realized by a computer. In this case, a process management program for the process management apparatus that causes the computer to realize the process management apparatus by causing the computer to operate as the respective means described above and a computer readable recording medium having the process management program recorded therein also fall into the category of the invention.

As described above, the process management apparatus includes: an estimation knowledge recording section that records factor estimation knowledge information that associates one or more candidates of failure factors with each of plural failure results, which can occur in a processing system for processing an object, and includes information concerning conditions leading to the respective failure factors and analysis ID information corresponding to the respective conditions; an analysis method recording section that records analysis method information of inspection result data concerning an inspection result of a process in the processing system and analysis ID information corresponding to the respective pieces of analysis method information; factor estimating means for estimating, on the basis of the factor estimation knowledge information corresponding to a specific failure result, a failure factor corresponding to the failure result; and analysis processing means for analyzing inspection result data on the basis of the analysis method information. The factor estimating means presents the conditions required for estimation of a failure factor to a user as a question. The analysis processing means receives analysis ID information of the condition corresponding to the question to there by perform analysis on the basis of the analysis method information corresponding to the ID and present an analysis result to the user.

Thus, there is an effect that it is possible to provide a process management apparatus that allows even a user unaccustomed to process management to accurately perform factor estimation. Since the analysis method information and the factor estimation knowledge information are provided separately and the analysis method information and the factor estimation knowledge information are associated by an analysis ID, it is possible to reduce an amount of information that should be prepared.

In the accompanying drawings:
Fig. 1 is a block diagram showing a schematic constitution of a process management apparatus according to an embodiment of the invention;
Fig. 2 is a block diagram showing a schematic constitution of a production system including the process management apparatus;
Fig. 3 is a diagram showing an example of a data collection and processing table;
Fig. 4 is a diagram showing an example of tree structure data of factor estimation knowledge information;
Fig. 5 is a diagram showing an example of a factor estimation screen;
Fig. 6 is a diagram showing an example of an analysis result screen; and
Fig. 7 is a flowchart showing a flow of analysis processing and factor estimation processing.

An embodiment of the invention will be hereinafter explained with reference to the accompanying drawings. In this embodiment, a process management system applied to a production system having a production line for printed boards will be explained. However, the invention is not limited to the production system for printed boards. It is possible to apply the invention to overall management for a process for processing an object. The process for processing an object means, for example, a production process for industrial products, an inspection process for mining and manufacturing products, agricultural products, or row materials, a treatment process for disposal objects (e.g., factorywastes, factorywastewater, waste gas, and refuse), an inspection process for disposal objects, an inspection process for facilities, and a recycle process.

### Constitution of the production system

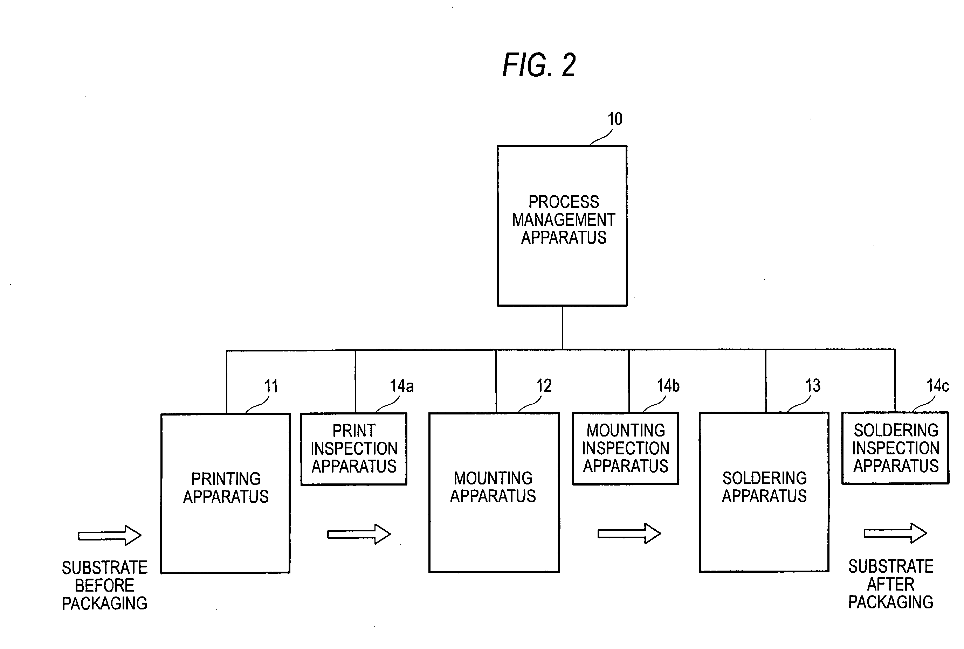

First, a production system (a processing system) 1 for printed boards to which the process management system according to this embodiment is applied will be explained with reference to Fig. 2. A production line in the production system 1 includes respective processes for manufacturing printed boards (a printing process, a mounting process, a reflow process, and the like). In an example shown in the figure, the production system 1 includes a printing apparatus 11 that performs a solder printing process for pasting solder on a substrate, a mounting apparatus 12 that performs a component mounting process for mounting electronic components on the substrate, a soldering apparatus 13 that performs a reflow process for soldering the electronic components on the substrate, and a process management apparatus 10 that performs management of the production system 1. The printing apparatus 11, the mounting apparatus 12, and the soldering apparatus 13 are arranged in this order from upstream to downstream in a flow of a manufactured product of the production system 1.

A print inspection apparatus 14a is arranged near the printing apparatus 11. A mounting inspection apparatus 14b is arranged near the mounting apparatus 12. A soldering inspection apparatus 14c is arranged near the soldering apparatus 13. The print inspection apparatus 14a inspects a quality of a substrate processed by the printing apparatus 11. The mounting inspection apparatus 14b inspects a substrate processed by the mounting apparatus 12. The soldering inspection apparatus 14c inspects a substrate processed by the soldering apparatus 13. In the following explanation, when it is unnecessary to distinguish the print inspection apparatus 14a, the mounting inspection apparatus 14b, and the soldering inspection apparatus 14c, these apparatuses are simply referred to as inspection apparatuses 14.

The process management apparatus 10 collectively manages the entire production system 1 and performs factor estimation processing and analysis processing described later. The process management apparatus 10 receives an input of various kinds of information and an instruction input from a user serving as a productionmanager and performs various kinds of processing.

The process management apparatus 10, the printing apparatus 11, the mounting apparatus 12, the soldering apparatus 13, the print inspection apparatus 14a, the mounting inspection apparatus 14b, and the soldering inspection apparatus 14c are connected to one another by a communication line to form a communication network. Any network may be adopted as the communication network as long as the respective apparatuses are capable of communicating with one another through the network. For example, it is assumed that a Local Area Network (LAN) is adopted as the communication network.

It is also possible that a terminal apparatus with which a user performs an operation input is provided separately from the process management apparatus 10 to be connected to the communication network and a data input to the process management apparatus 10 and various kinds of screen display are performed by the terminal apparatus.

In the example described above, the inspection apparatuses 14 are provided in association with the printing apparatus 11, the mounting apparatus 12, and the soldering apparatus 13, respectively. At least one inspection apparatus 14 only has to be provided in the production system 1. For example, if at least the soldering inspection apparatus 14c is provided, it is possible to detect a failure that occurs in a final manufacturing result.

### Constitution of the process management apparatus

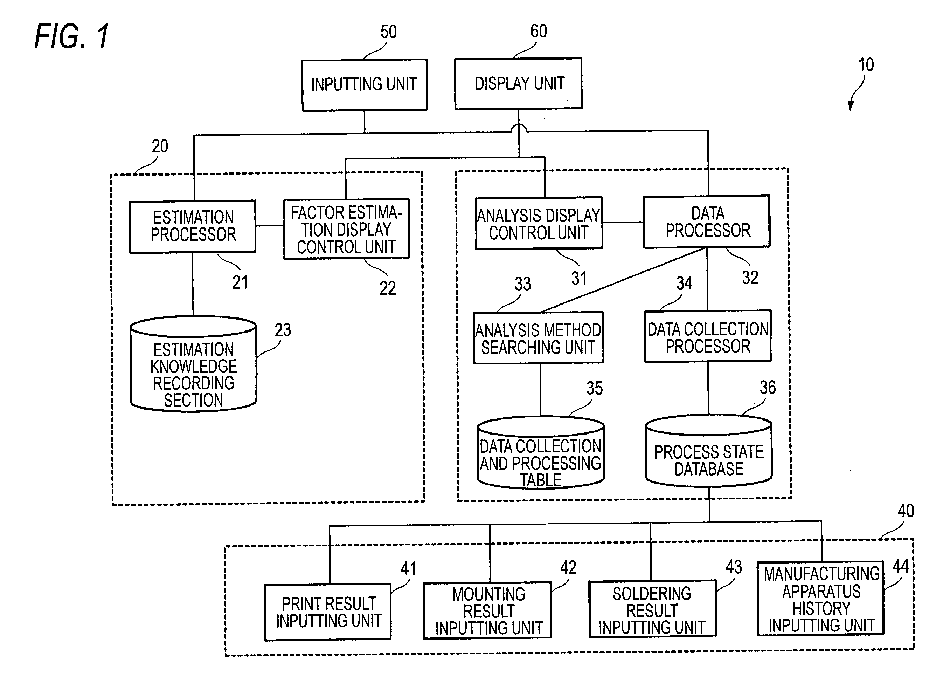

A constitution of the process management apparatus 10 will be hereinafter explained with reference to Fig. 1. As shown in the figure, the process management apparatus 10 includes a factor estimating unit (factor estimating means) 20, an analysis processor (analysis processing means) 30, an inspection result inputting unit (inspection result inputting means) 40, an inputting unit 50, and a display unit 60.

The inputting unit 50 receives an instruction input and an information input from the user. The inputting unit 50 is constituted by, for example, key inputting means such as a keyboard and buttons or a pointing device such as a mouse. The display unit 60 displays various processing contents in the process management apparatus 10. The display unit 60 is constituted by, for example, a display device such as a liquid crystal display or a Cathode Ray Tube (CRT).

The inspection result inputting unit 40 receives data concerning an inspection result of a manufacturing process in the production system 1. The inspection result inputting unit 40 includes a print result inputting unit 41, a mounting result inputting unit 42, a soldering result inputting unit 43, and a manufacturing apparatus history inputting unit 44. The printing result inputting unit 41 receives a result of inspection by the print inspection apparatus 14a. The mounting result inputting unit 42 receives a result of inspection by the mounting inspection apparatus 14b. The soldering result inputting unit 43 receives a result of inspection by the soldering inspection apparatus 14c. The manufacturing apparatus history inputting unit 44 receives information on a manufacturing history from the printing apparatus 11, the mounting apparatus 12, and the soldering apparatus 13.

The inspection result inputting unit 40 only has to receive information on an inspection result from at least one of the printing apparatus 11, the mounting apparatus 12, the soldering apparatus 13, the print inspection apparatus 14a, the mounting inspection apparatus 14b, and the soldering inspection apparatus 14c. For example, if the inspection result inputting unit 40 receives only inspection result data concerning a soldering result from the soldering inspection apparatus 14c, it is possible to acquire inspection result data concerning a failure that occurs in a final manufacturing result.

The analysis processor 30 performs analysis processing for a manufacturing state on the basis of data concerning an inspection result. The analysis display control unit 31 includes an analysis display control unit 31, a data processor 32, an analysis method searching unit 33, a data collection processor 34, a data collection and processing table (an analysis method recording section) 35, and a process state database (an inspection result recording section) 36.

The process state database 36 is a database that records data concerning an inspection result of a manufacturing process in the production system 1 (inspection result data) received by the inspection result inputting unit 40. A result of inspection by the print inspection apparatus 14a, a result of inspection by the mounting inspection apparatus 14b, a result of inspection by the soldering inspection apparatus 14c, and information on a manufacturing history from the printing apparatus 11, the mounting apparatus 12, and the soldering apparatus 13 are recorded in the process state database 36. The process state database 36 is recorded in a recording medium such as a hard disk device.

The data collection and processing table 35 records information on a data collection method and information on a processing method for data collected. The information on a data collecting method indicates information concerning which data is collected out of a large number of inspection result data recorded in the process state database 36. The information on a data processing method indicates information concerning how the data collected by the data collecting method corresponding to the data processing method should be processed and analyzed. An analysis ID for specifying a combination of the information on a data collection method and the information on a processing method for data collected is also recorded in the data collection and processing table 35. The data collection and processing table 35 is recorded in a recording medium such as a hard disk device. Details of the data collection and processing table 35 will be described later.

The data processor 32 performs data processing required for analysis processing in the analyzing processor 30. The data processor 32 acquires information on a data collection method and information on a data processing method from the analysis method searching unit 33 according to an instruction input inputted from the inputting unit 50. The information on a data collection method acquired is transmitted to the data collection processor 34 and data required by an analysis is acquired. The data processor 32 applies data processing to the acquired data on the basis of the information on a data processing method acquired and transmits an analysis result to the analysis display control unit 31.

The analysis method searching unit 33 performs processing for acquiring information on a data collection method and information on a data processing method corresponding to an instruction from the data processor 32 and transmitting the information acquired to the data processor32. When information for specifying the analysis ID is sent from the data processor 32, the analysis method searching unit 33 specifies a data collection method and a data processing method that should be acquired. Examples of the analysis ID include information by a character, information by a numerical value, and information by a barcode. When the information by a barcode is used, a barcode reader is used as the inputting unit 50.

The data collection processor 34 performs processing for acquiring inspection result data, which corresponds to an instruction from the data processor 32, from the process state database 36 and transmitting the inspection result data to the data processor 32. The analysis display control unit 31 controls screen display on the display unit 60 concerning analysis processing. Examples of the screen display concerning analysis processing include an analysis result screen described later.

The factor estimating unit 20 performs, concerning information on a failure result inputted by the user, processing for estimating a factor of the failure result. The factor estimating unit 20 includes an estimation processor 21, a factor estimation display control unit 22, and an estimation knowledge recording section 23.

The estimation knowledge recording section 23 records factor estimation knowledge information. The factor estimation knowledge information is information for searching for a factor of each of plural failure result. The estimation knowledge recording section 23 is recorded in a recording medium such as a hard disk device. Details of the factor estimation knowledge information will be described later.

The estimation processor 21 reads out factor estimation knowledge information concerning a failure result, which is inputted from the inputting unit 50, from the estimation knowledge recording section 23 and performs estimation of a factor on the basis of the factor estimation knowledge information. Although not described in detail, the factor estimation knowledge information includes branching judgment used as a condition. When an answer to the branching judgment is inputted from the inputting unit 50, factor estimation is performed. The factor estimation display control unit 22 controls screen display on the display unit 60 concerning factor estimation processing. Examples of the screen display concerning the factor estimation processing include a factor estimation screen described later.

### Data collection and processing table

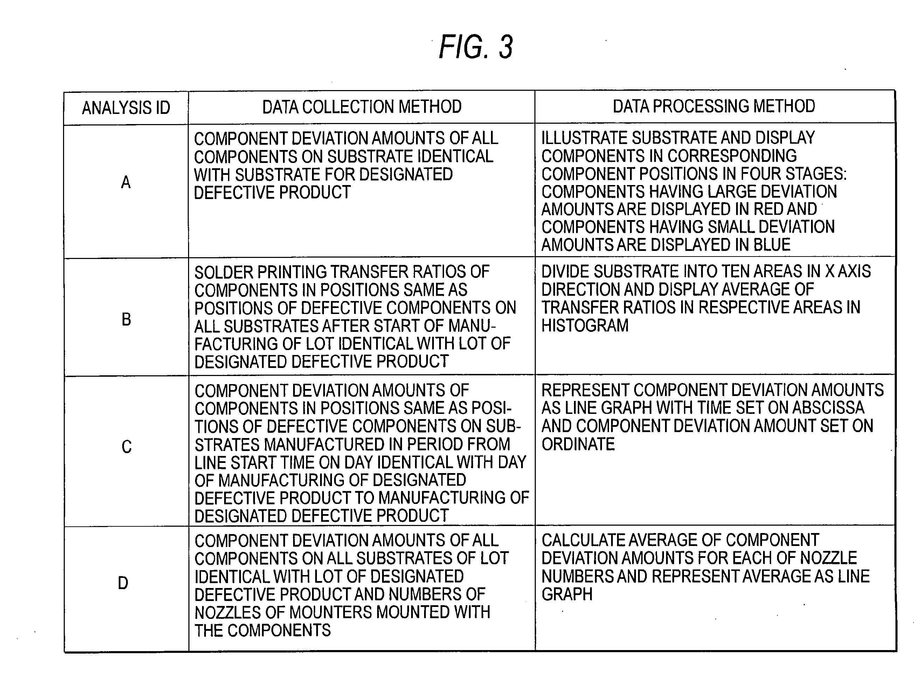

The data collection and processing table 35 will be explained with reference to Fig. 3. As shown in the figure the data collection and processing table 35 includes plural analysis IDs for specifying combinations of information on a data collection method and information on a processing method for data collected and also includes data collection method information and data processing method information corresponding to the respective analysis IDs.

The data collection method information indicates information concerning which data should be collected out of the inspection result data stored in the process state database 36. Examples of the data collection method information in the example shown in Fig. 3 will be hereinafter described.

Data collection method information corresponding to an analysis ID: A is component deviation amounts of all components on a substrate identical with a substrate on which a designated defective product is formed. Data collection information corresponding to an analysis ID: B is solder printing transfer ratios of components in positions that are the same as positions of defective components on all substrates after start of manufacturing of a lot identical with a lot of the designated defective product. Data collection method information corresponding to an analysis ID: C is component deviation amounts of components in positions that are the same as positions of defective components on substrates manufactured in a period from a line start time on a day identical with a day of manufacturing of the designated defective product to manufacturing of the designated defective product. Data collection method information corresponding to an analysis ID:
D is component deviation amounts of all components on all substrates of a lot identical with a lot of the designated defective product and numbers of nozzles of mounters mounted with the components.

The data processing method information indicates information on an analysis method for data collected on the basis of the data collection method information and information on a display method for an analysis result. Examples of the data processing method information in the example shown in Fig. 3 will be described.

Data processing method information corresponding to the analysis ID: A indicates a method of illustrating a substrate and displaying components in corresponding component positions in four stages: components having large deviation amounts are displayed in red and components having small deviation amounts are displayed in blue. Data processing method information corresponding to an analysis ID: B indicates a method of dividing a substrate into ten areas in an X axis direction and displaying an average of transfer ratios in the respective areas in a histogram. Data processing method information corresponding to an analysis ID: C indicates a method of representing component deviation amounts as a line graph with time set on an abscissa and a component deviation amount set on an ordinate. Data processing method information corresponding to an analysis ID: D indicates a method of calculating an average of component deviation amounts for each of nozzle numbers and representing the average as a line graph.

The analysis method searching unit 33 specifies information on a designated data collection method and information on a designated data processing method from such a data collection and processing table 35 and transmits the information to the data processor 32. The data processor 32 transmits the information on the data collection method received to the data collection processor 34. Inspection result data stored in the process state database 36 is extracted in accordance with the information. The data processor 32 performs an analytical arithmetic operation on the basis of the inspection result data extracted and in accordance with the data processing method received. The analysis display control unit 31 displays an analysis result.

### Factor estimation knowledge information

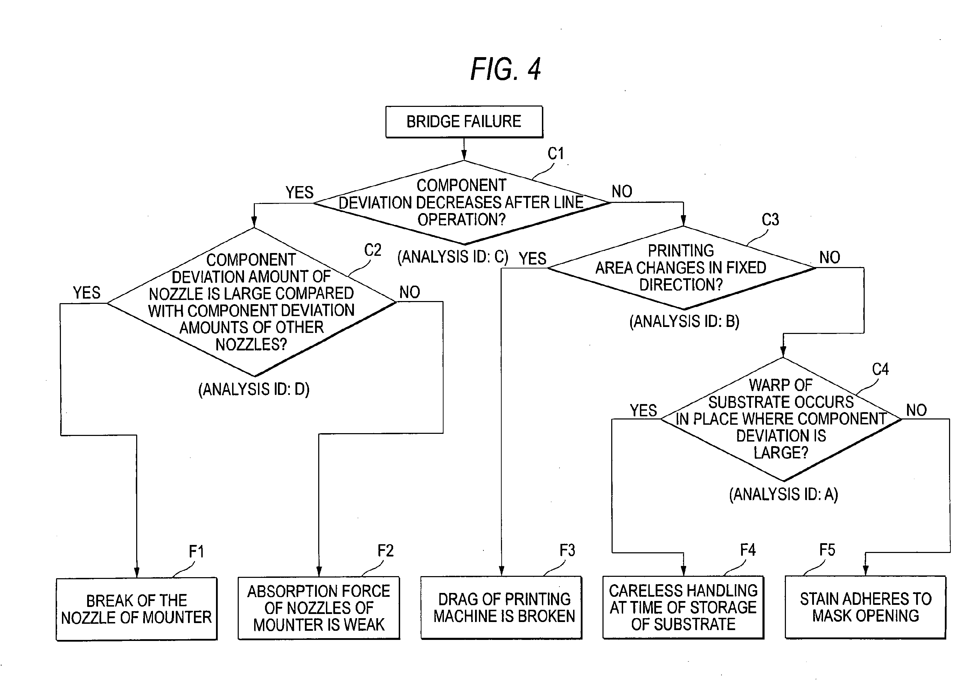

Factor estimation knowledge information will be hereinafter explained with reference to Fig. 4. As shown in the figure, the factor estimation knowledge information is data of a tree structure for searching for factors of respective failure results. Explaining the factor estimation knowledge information in detail, the factor estimation knowledge information associates one or more candidates of failure factors with the respective failure results and includes information concerning conditions leading to the respective failure factors. In other words, in the tree structure of the factor estimation knowledge information, it is possible to reach a specific failure factor when branches of conditions are selected with respect to a certain failure result on the basis of information concerning an occurrence state of a failure.

An example shown in Fig. 4, that is, factor estimation knowledge information in the case in which a failure result is a bridge failure will be hereinafter explained as an example of the factor estimation knowledge information. First, in a condition C1, it is judged whether a component deviation decreases after a production line is started. The analysis ID: C is set for the condition C1. In other words, judgment of the condition C1 is performed on the basis of information obtained by collecting inspection result data according to the data collection method corresponding the analysis ID: C and analyzing and displaying the inspection result data according to the data processing method corresponding to the analysis ID: C.

In the case of YES in the condition C1, that is, when it is judged that a component deviation decreases after the production line is started, it is judged in a condition C2 whether a component deviation amount of a nozzle mounted with an object defective component is large compared with those of other nozzles. The analysis ID: D is set for the condition C2. In other words, judgment of the condition C2 is performed on the basis of information obtained by collecting inspection result data according to the data collection method corresponding to the analysis ID: D and analyzing and displaying the inspection result data according to the data processing method corresponding to the analysis ID: D.

In the case of YES in the condition C2, that is, when it is judged that the component deviation amount of the nozzle mounted with the object defective component is large compared with those of the other nozzles, it is judged that a failure factor is a failure factor F1, that is, a break of the nozzle of the mounting apparatus 12 (a mounter). On the other hand, in the case of NO in the condition C2, that is, when it is judged that the component deviation amount of the nozzle mounted with the object defective component is not large compared with those of the other nozzles, it is judged that a failure factor is a failure factor F2, that is, weak absorption force of nozzles of the mounting apparatus 12 (the mounter).

On the other hand, in the case of NO in the condition C1, that is, when it is judged that a component deviation does not decrease after the production line is started, it is judged in a condition C3 whether a printing area changes in a fixed direction. The analysis ID: B is set for the condition C3. In other words, judgment of the condition C2 is performed on the basis of information obtained by collecting inspection result data according to the data collection method corresponding to the analysis ID: B and analyzing and displaying the inspection result data according to the data processing method corresponding to the analysis ID: B.

In the case of YES in the condition C3, that is, when it is judged that a printing area changes in a fixed direction, it is judged that a failure factor is a failure factor F3, that is, a break of a drag of the printing apparatus 11 (a printing machine).

On the other hand, in the case of NO in the condition C3, that is, when it is judged that a printing area does not change in a fixed direction, it is judged in a condition C4 whether warp of a substrate occurs in a place where component deviation is large. The analysis ID: A is set for the condition C4. In other words, judgment of the condition C3 is performed on the basis of information obtained by collecting inspection result data according to the data collection method corresponding to the analysis ID: A and analyzing and displaying the inspection result data according to the data processing method corresponding to the analysis ID: A.

In the case of YES in the condition C4, that is, when it is judged that warp of a substrate occurs in a place where component deviation is large, it is judged that a failure factor is a failure factor F4, that is, careless handling at the time of storage of a substrate. On the other hand, in the case of NO in the condition C4, that is, when it is judged that warp of a substrate does not occur in a place where component deviation is large, it is judged that a failure factor is a failure factor F5, that is, adhesion of stain to a mask opening.

### Factor estimation screen

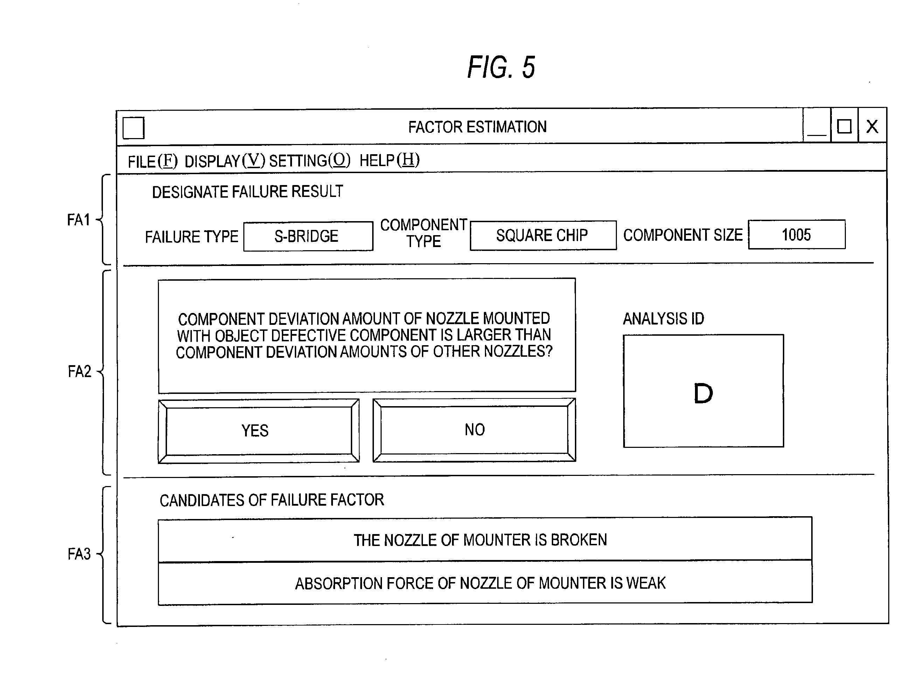

A display screen displayed on the display unit 60 in the factor estimation processing performed by the factor estimating unit 20 (hereinafter referred to as factor estimation screen) will be explained with reference to Fig. 5. As shown in the figure, a failure result designation area FA1, an estimated process display area FA2, and a factor candidate display area FA3 are provided on the factor estimation screen.

There are three input areas in the failure result designation area FA1. The three input areas are a failure type input area in which a type of a failure result is inputted, a component type input area in which a type of a component in which a failure occurs is inputted, and a component size input area in which a size of the component in which the failure occurs is inputted. When the occurrence of the failure is detected by the user, information on the failure result is inputted to the three input areas. As the input to the three input areas, a character may be directly inputted by the user. Alternatively, it is also possible that options are displayed by a drop-down list or the like and the user selects a specific item out of the options and inputs the specific item.

A question display area in which a question required for estimation of a failure factor is displayed, answer input buttons for inputting an answer to the question, and an analysis ID display area in which an analysis ID is displayed are provided in the estimated process display area FA2. Conditions included in factor estimation knowledge information corresponding to a relevant failure result are sequentially displayed in the question display area in accordance with a tree structure.

First, the estimation processor 21 specifies a failure result on the basis of information on a failure inputted in the failure result designation area FA1. The estimation processor 21 reads out data of a tree structure of factor estimation knowledge information corresponding to the failure result from the estimation knowledge recording section 23. The factor estimation display control unit 22 displays conditions in the question display area in order in accordance with the tree structure. The estimation processor 21 reads out an analysis ID corresponding to a condition displayed in the question display area from the estimation knowledge recording section 23. The factor estimation display control unit 22 displays the analysis ID in the analysis ID display area.

Thereafter, the analysis processor 30 analyzes inspection result data on the basis of the analysis ID. An analysis result is displayed. The user judges an answer to the question displayed in the question display area by looking at this analysis result and inputs an answer from the answer input buttons by the user. Thereafter, the next conditions are sequentially displayed in the question display area in accordance with the answer.

Candidates of failure factors at a point of a condition displayed in the question display area are displayed in the factor candidate display area FA3. In other words, at a point when the first condition in the tree structure of the factor estimation knowledge information is displayed, all candidates of failure factors of a relevant failure result are displayed. The candidates of failure factors decrease as the conditions are narrowed. Finally, one failure factor is specified.

For example, in the example of the factor estimation knowledge information shown in Fig. 4, at a point when the condition C1 is displayed, the failure factors F1 to F5 are displayed in the factor candidate display area FA3. At a point when the condition C2 is displayed, the failure factors F1 and F2 are displayed in the factor candidate display area FA3. When the answer input button "YES" is selected at this point, only the failure factor F1 is displayed in the factor candidate display area FA3.

### Analysis result screen

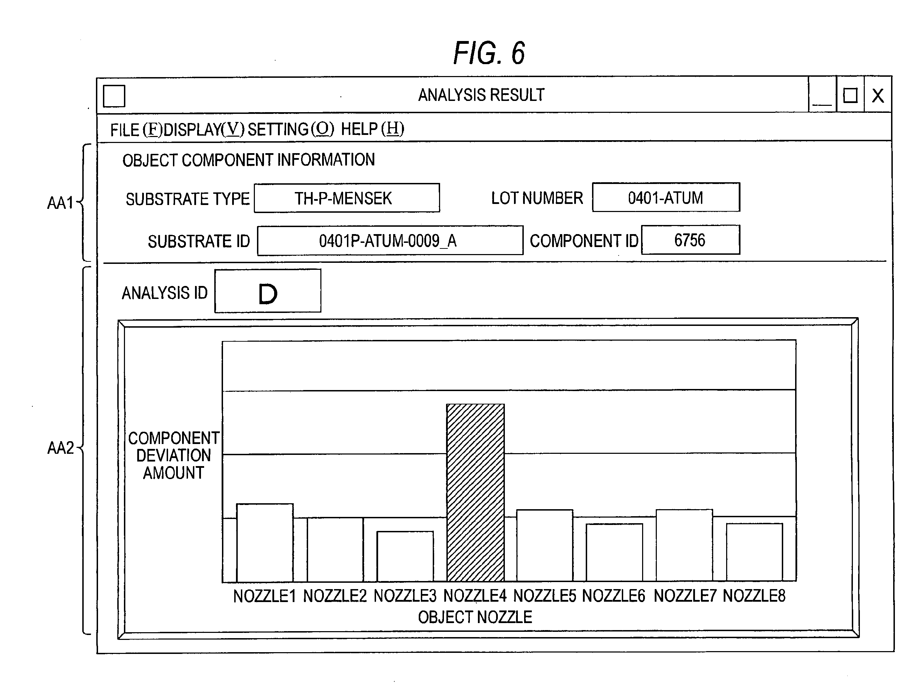

A display screen displayed on the display unit 60 in the analysis processing performed by the analysis processor 30 (hereinafter referred to as analysis result screen) will be explained with reference to Fig. 6. As shown in the figure, an object component information area AA1 and a result display area AA2 are provided on the analysis result screen.

Component specifying information that specifies a component to be analyzed is displayed in the object component information area AA1. Examples of the component specifying information include substrate form information, lot number information, substrate ID information, and component ID information. The data processor 32 specifies the component specifying information on the basis of information on a failure inputted to the factor estimating unit 20 and an analysis ID. An input area for an analysis ID and an analysis result are displayed in the result display area AA2.

When an analysis ID inputted in the input area by the user, first, the data processor 32 reads out data collection method information corresponding to the analysis ID from the data collection and processing table 35 via the analysis method searching unit 33. The data processor 32 receives information on a failure result from the factor estimating unit 20. The data processor 32 specifies a component, data of which should be collected, on the basis of the data collection method information and failure result information. The data processor 32 displays information on the component specified in the object component information area AA1.

The data processor 32 reads out specific inspection result data concerning the component, data of which should be collected, from the process state database 36 via the data collection processor 34 on the basis of the data collection method information. The data processor 32 processes the inspection result data on the basis of a data processing method corresponding to the analysis ID and causes the analysis result control unit 31 to display an analysis result on the display unit 60. The analysis result is displayed in a form of, for example, illustration of a state of a substrate, a histogram, a line graph, or a bar graph.

### Flow of the analysis processing and the factor estimation processing

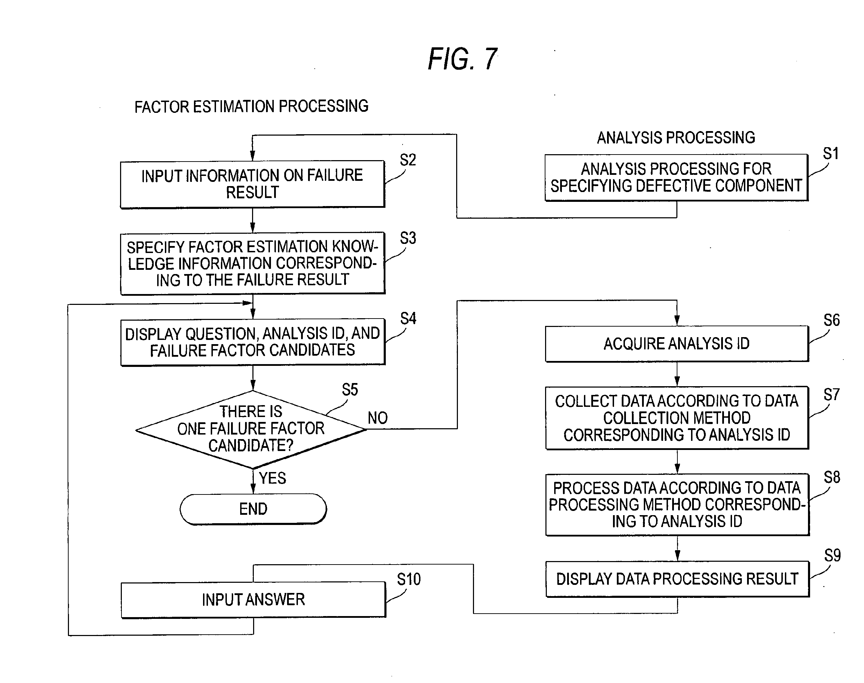

A flow of the analysis processing and the factor estimation processing will be hereinafter explained with reference to a flowchart shown in Fig. 7. In the figure, processing in S1 and S6 to S9 indicates the analysis processing by the analysis processor 30 and processing in S2 to S5 and S10 indicates the factor estimation processing by the factor estimating unit 20.

First, in step 1 (hereinafter "S1"), the analysis result by the analysis processor 30 is performed in accordance with an instruction input from the user for the purpose of detecting a failure result. The user appropriately designates analysis processing that uses the inspection result data recorded in the process state database 36. The analysis processing designated is performed by the analysis processor 30. The user judges whether a failure has occurred by checking various analysis results.

As a result of the analysis processing in S1, when the user judges that a failure has occurred, on the factor estimation screen, an input of information on a failure result by the user is received by the inputting unit 50 (S2). The information on the failure result is inputted to the estimation processor 21. The estimation processor 21 specifies factor estimation knowledge information corresponding to the failure result out of the factor estimation knowledge information recorded in the estimation knowledge recording section 23 (S3).

The estimation processor 21 specifies a condition included in the factor estimation knowledge information specified as a question in accordance with a tree structure. The factor estimation display control unit 22 displays this question on the factor estimation screen. The factor estimation display control unit 22 displays an analysis ID corresponding to the question specified on the factor estimation screen. The factor estimation display control unit 22 displays a list of candidates of failure factors at the present point on the factor estimation screen (S4).

The estimation processor 21 judges whether there is one candidate of a failure factor (S5). When there is one candidate of a failure factor (YES in S5), it is judged that a failure factor has been specified. The factor estimation processing ends. On the other hand, when there is more than one candidates of failure factors (NO in S5), analysis processing required for answering a question is performed.

First, in S6, the user inputs an analysis ID on the analysis processing screen. The analysis ID inputted is transmitted from the data processor 32 to the analysis method searching unit 33. The analysis method searching unit 33 reads out a data collection method and a data processing method corresponding to the analysis ID from the data collection and processing table 35. The data processor 32 reads out specific inspection result data concerning a component, data of which should be collected, from the process state database 36 via the data collection processor 34 on the basis of the data collection method (S7). The data processor 32 processes the inspection result data on the basis of the data processing method corresponding to the analysis ID (S8). The analysis display control unit 31 displays a result of this processing on the analysis result screen (S9).

When the analysis result is displayed on the analysis result screen, the user inputs an answer to the question displayed on the factor estimation screen on the basis of the analysis result (S10). The input of the answer by the user is received by the estimation processor 21. The estimation processor 21 specifies, according to a result of the answer by the user, a condition included in the factor estimation knowledge information as the next question in accordance with the tree structure and performs the processing in S4 and the subsequent steps.

In the example described above, an analysis ID is inputted to the analysis processor 30 according to an input from the user in S6. However, information on an analysis ID specified by the factor estimating unit 20 may be transferred to the data processor 32. In this case, it is possible to reduce time and labor for inputting an analysis ID by the user.

In the example described above, an answer to the question is inputted by the user in S10. However, it is also possible that a result of analysis by the analysis processor 30 is inputted to the factor estimating unit 20 and the estimation processor 21 selects an answer to the question on the basis of the analysis result. In this case, it is also possible that, for example, a result selected by the estimation processor 21 is presented to the user to have the user to confirm the result and, then, the estimation processor 21 shifts to the next question.

The respective functional blocks included in the factor estimating unit 20, the analysis processor 30, and the inspection result inputting unit 40 of the process management apparatus 10 may be constituted by a hardware logic or may be realized by software using a CPU as described below.

The process management apparatus 10 includes a Central Processing Unit (CPU) that executes commands of a control program for realizing the respective functions, a Read Only Memory (ROM) having the control program stored therein, a RandomAccess Memory (ROM) that develops the control program, and a storage device (a recording medium) such as a memory that stores the control program and various data. It is also possible to attain the object of the invention when a recording medium having recorded therein program codes (an execution form program, an intermediate code program, and a source program) of the control program of the process management apparatus 10, which is software for realizing the functions described above, in a form readable by a computer is supplied to the process management apparatus 10 and the computer (or a CPU or an MPU) reads out and executes the program codes recorded in the recording medium.

As the recording medium, it is possible to use, for example, tapes such as a magnetic tape and a cassette tape, disks including magnetic disks such as a floppy (registered trademark) disk and a hard disk and optical disks such as a CD-ROM, an MO, an MD, a DVD, and a CD-R, cards such as an IC card (including a memory card) and an optical card, or semiconductor memories such as a mask ROM, an EPROM, an EEPROM, and a flash ROM.

The process management apparatus 10 may be constituted to be connectable to a communication network to supply the program codes via the communication network. The communication network is not specifically limited. It is possible to use, for example, the Internet, an intranet, an extranet, a LAN, an ISDN, a VAN, a CATV communication network, a virtual private network, a telephone line network, a mobile communication network, a satellite communication network, and the like. A transmission medium constituting the communication network is not specifically limited. It is possible to use, for example, wire transmission media such as the IEEE1394, the USB, a power-line carrier, a cable TV line, a telephone line, and an ADSL line and wireless transmission media such as an infrared ray media like the IrDA or a remote controller, Bluetooth (registered trademark), the 802.11 radio, the HDR, a cellular phone network, a satellite link, and a ground wave digital network. The invention can also be realized in a form of a computer data signal embedded in a carrier wave in which the program code is embodied by electronic transmission.

The process management apparatus according to the invention is suitable for, for example, management of a production process for printed board. However, application of the process management apparatus is not limited to this. It is possible to widely apply the process management apparatus to all kinds of processes for processing an object such as a production process for industrial products, an inspection process for mining and manufacturing products, agricultural products, or row materials, a treatment process for disposal objects (e.g., factory wastes, factory waste water, waste gas, and refuse), an inspection process for disposal objects, an inspection process for facilities, and a recycle process.

## Claims

1. A process management apparatus comprising:
an estimation knowledge recording section that records factor estimation knowledge information that associates one or more candidates of failure factors with each of plural failure results, which can occur in a processing system for processing an object, and includes information concerning conditions leading to the respective failure factors and analysis ID information corresponding to the respective conditions;
an analysis method recording section that records analysis method information of inspection result data concerning an inspection result of a process in the processing system and analysis ID information corresponding to the respective pieces of analysis method information;
factor estimating means for estimating, on the basis of the factor estimation knowledge information corresponding to a specific failure result, a failure factor corresponding to the failure result; and
analysis processing means for analyzing inspection result data on the basis of the analysis method information
wherein the factor estimating means presents the conditions required for estimation of a failure factor to a user as a question, and
the analysis processing means receives analysis ID information of the condition corresponding to the question to thereby perform analysis on the basis of the analysis method information corresponding to the ID and present an analysis result to the user.

2. A process management apparatus according to claim 1,
wherein
the analysis method information is data collection method information that indicates which inspection result data should be collected out of the inspection result data and data processing method information concerning a processing method for data collected, and
the analysis ID specifies a combination of the data collection method information and the data processing method information.

3. A process management apparatus according to claim 1 or 2, further comprising:
inspection result inputting means for receiving inspection result data from an inspection apparatus that inspects a process in the processing system; and
an inspection result recording section that records the inspection result data received by the inspection result inputting means,
wherein the analysis processingmeans acquires inspection result data from the inspection result recording section and performs an analysis.

4. A process management apparatus according to claim 1, 2, or 3 , wherein the analysis processingmeans receives the analysis ID information according to an input from the user.

5. A process management apparatus according to any of claims 1 to 4, wherein
the factor estimating means transmits analysis ID information of a condition corresponding to a question presented to the user at the present point to the analysis processing means, and
the analysis processing means receives the analysis ID information from the factor estimating means.

6. A process management apparatus according to any of claims 1 to 4, wherein
the factor estimating means transmits information on a failure result to the analysis processing means, and
the analysis processing means performs an analysis on the basis of the information on the failure result received from the factor estimating means and the analysis method information.

7. A process management method comprising:
an estimation knowledge recording step of recording factor estimation knowledge information that associates one or more candidates of failure factors with each of plural failure results, which can occur in a processing system for processing an object, and includes information concerning conditions for the respective failure factors and analysis ID information corresponding to the respective conditions;
an analysis method recording step of recording analysis method information of inspection result data concerning an inspection result of a process in the processing system and analysis ID information corresponding to the respective pieces of analysis method information;
a factor estimating step of estimating, on the basis of the factor estimation knowledge information corresponding to a specific failure result, a failure factor corresponding to the failure result; and
an analysis processing step of analyzing inspection result data on the basis of the analysis method information,
wherein the conditions required for estimation of a failure factor are presented to a user as a question, and
in the analysis processing step, analysis ID information of the condition corresponding to the question is received, whereby analysis is performed on the basis of the analysis method information corresponding to the ID and an analysis result is presented to the user.
